Europäisches Patentamt

European Patent Office

Office européen des brevets

(11) Veröffentlichungsnummer : **0 128 969**
**B1**

(12)

# EUROPÄISCHE PATENTSCHRIFT

(45) Veröffentlichungstag der Patentschrift :
01.10.86

(21) Anmeldenummer : 83105969.6

(22) Anmeldetag : 18.06.83

(51) Int. Cl.⁴ : **F 04 B 23/10, F 04 C 15/00**

(54) Doppelpumpe.

(43) Veröffentlichungstag der Anmeldung :
27.12.84 Patentblatt 84/52

(45) Bekanntmachung des Hinweises auf die Patenterteilung : 01.10.86 Patentblatt 86/40

(84) Benannte Vertragsstaaten :
DE FR GB IT SE

(56) Entgegenhaltungen :
DE-A- 2 436 321
FR-A- 1 551 377
FR-A- 2 525 710
US-A- 2 748 578

(73) Patentinhaber : Vickers Systems GmbH
Frölingstrasse 41
D-6380 Bad Homburg (DE)

Daimler Benz Aktiengesellschaft
Stuttgart-Untertürkheim Postfach 202
D-7000 Stuttgart 60 (DE)

(72) Erfinder : Schulz, René, Dr. Dipl.-Ing.
Im Spiess 8
D-6392 Neu-Anspach (DE)
Erfinder : Braum, Heinrich Josef, Dipl.-Ing.
Usinger Weg 50
D-6380 Bad Homburg 1 (DE)
Erfinder : Nadolny, Kurt
Ulrichsrain 19a
D-7141 Erdmannshausen (DE)
Erfinder : Nguyen, Van-Trung
Im Asemwald 56/5
D-7000 Stuttgart 70 (DE)

(74) Vertreter : Blumbach Weser Bergen Kramer Zwirner
Hoffmann Patentanwälte
Sonnenbergerstrasse 43
D-6200 Wiesbaden 1 (DE)

**Beschreibung**

Die Erfindung bezieht sich auf eine Doppelpumpe, enthaltend eine Hauptpumpe und eine Nebenpumpe, die über eine Welleneinrichtung angetrieben werden, welche eine Drehachse bildet, wobei miteinander kooperierende, gleichachsig zur Drehachse liegende Rotationslaufflächen durch eine Sicherheits-Schereinrichtung überbrückt und miteinander verbunden sind und Rückzugsräume für die Schereinrichtung vorgesehen sind, in die im Sicherungsfall, beim Bruch der Schereinrichtung, die Bruchstücke der Schereinrichtung zurückweichen können.

Eine Doppelpumpe dieser Art (FR-A-1 551 377) besteht aus zwei Zahnradpumpen, deren Ritzel-Wellen über eine Festkupplung mit Schereinrichtung miteinander verbunden sind und so die Welleneinrichtung bilden. Im einzelnen weisen die Enden der Ritzelwellen jeweils Keilverzahnungen auf, die mit entsprechenden Keilverzahnungen von Kupplungsringen in Eingriff stehen, die wiederum mit ihren radialen Flächen einander angrenzen und durch Stifte als Sicherheits-Schereinrichtung miteinander verbunden sind. Die Stifte sind in achsparallelen Bohrungen der Kupplungsringe angeordnet, wobei die Bohrungen nicht ganz von den Stiften ausgefüllt sind.

Doppelpumpen unter Einschluß einer Radialkolbenpumpe sind bekannt (DE-A-2 436 321). Wenn einer der Kolben der Radialkolbenpumpe klemmt, fällt die Radialkolbenpumpe aus oder geht zu Bruch, wobei es vorkommen kann, daß die Antriebswelle blockiert wird, so daß auch die Hauptpumpe, gewöhnlich eine Flügelzellenpumpe, ausfällt. Ein derartiges Verhalten ist bei Anwendungen im Fahrzeugbereich höchst unerwünscht.

Der Erfindung liegt die Aufgabe zugrunde, eine Anordnung bei einer Doppelpumpe, insbesondere einer Flügelzellenpumpe als Hauptpumpe und einer Radialkolbenpumpe als Nebenpumpe, zu treffen, so daß die Hauptpumpe weiter betrieben werden kann, auch wenn die Nebenpumpe ausfällt.

Die gestellte Aufgabe wird aufgrund der Maßnahmen des Hauptanspruchs gelöst.

Wenn die Nebenpumpe blockieren sollte, z. B. wegen Fressens eines Kolbens, wird die Schereinrichtung durchtrennt, und der Exzenter oder Nocken der Nebenpumpe kann auf der Rotationslauffläche der Welle gleiten. Die Bruchfläche der Schereinrichtung wird nur wenig von einer Rotationslauffläche abweichen, so daß nur kleine Erhebungen der Bruchstücke in diese Rotationslauffläche hineinragen. Bei der Drehung der Welle relativ zu dem blockierten Exzenter treffen diese vorstehenden Teile aufeinander und werden zurückgedrängt, was deshalb möglich ist, weil die Bruchstücke der Schereinrichtung in entsprechende Rückzugsräume ausweichen können. Auch im ungünstigsten Fall kommt nur eine kleine Zahl von Folgeberührungen der Scherflächen zustande, so daß keine nennenswerte Erwärmung der Umgebung stattfindet. Die vorgeschlagene Lösung benötigt nur einen geringen Bauraum und verursacht nur geringe zusätzliche Herstellungskosten.

Vom angetriebenen Ende der Welle aus gesehen sollte die Nebenpumpe vor der Hauptpumpe angeordnet sein. Dies gilt vor allem dann, wenn die Hauptpumpe aus einer Flügelzellenpumpe besteht und die Nebenpumpe aus einer Radialkolbenpumpe. In diesem Fall kann die Flügelzellenpumpe an dem Ende der Welle angeordnet sein, welches vom angetriebenen Ende entfernt ist, während die Radialkolbenpumpe im mittleren Bereich der Welle sitzt. Von der Hauptpumpe aus können über Längsbohrungen in der Welle die Gleitlager der Welle und die Notlaufstellen geschmiert werden, wobei man das Lecköl anzapfen kann.

Die einfachste Schereinrichtung besteht aus einem zylindrischen Scherbolzen, der mit Preßsitz in eine entsprechende radiale Bohrung des Exzenters oder des Nockens und der Welle hineingetrieben ist, wobei die Länge der Bohrung etwas größer als die Länge des Scherbolzens ist. Der Scherbolzen kann auch eine Sollbruchstelle aufweisen.

Ein Ausführungsbeispiel der Erfindung wird anhand der Zeichnung beschrieben. Dabei zeigt :

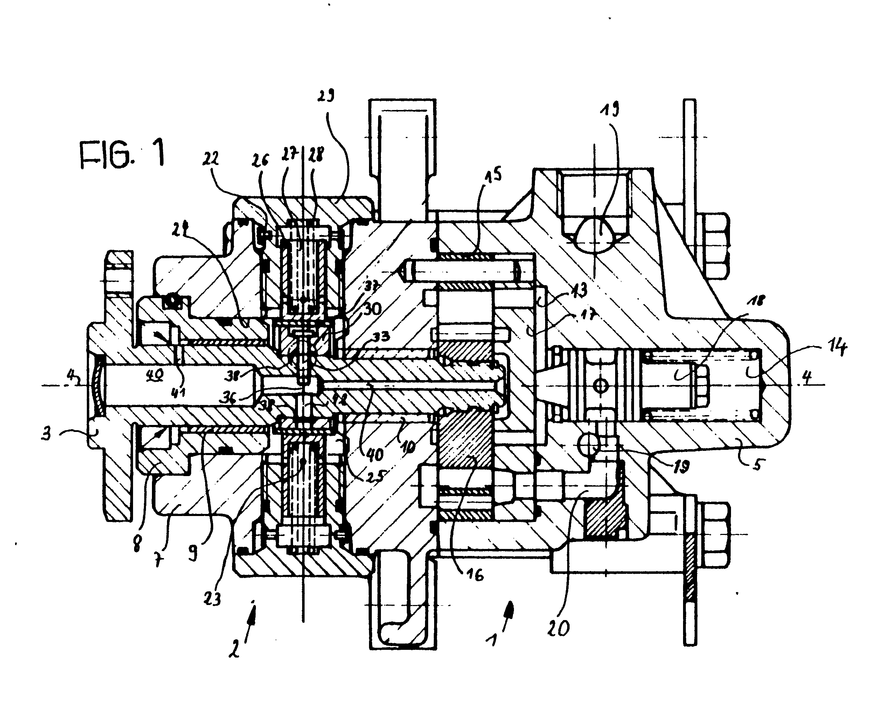

Figur 1 einen Längsschnitt durch die Doppelpumpe gemäß einer vertikalen und horizontalen Ebene und

Figur 2 eine vergrößerte Einzelheit.

Die Doppelpumpe enthält eine Flügelzellenpumpe 1 als Hauptpumpe, eine Radialkolbenpumpe 2 als Nebenpumpe und eine gemeinsame Welle 3 zum Antrieb beider Pumpen 1, 2. Oberhalb der Drehachse 4-4 liegt der Schnitt in einer vertikalen Ebene, unterhalb in einer horizontalen Ebene. Es ist ein topfförmiges Gehäuse 5 zur Aufnahme der Flügelzellenpumpe 1 und ein Radialkolbenpumpengehäuse 7 vorgesehen. Das Gehäuseteil 7 dient gleichzeitig als Lagerdeckel für das Gehäuseteil 5 und nimmt eine Abdichtbuchse 8 mit Gleitlager 9 und ein weiteres Gleitlager 10 der Welle 3 auf.

Das Gehäuseteil 5 weist Innenräume 13 und 14 auf, die achskonzentrisch angeordnet sind und ineinander übergehen. Im Innenraum 13 ist eine Baugruppe eingesetzt, die einen Nockenring 15, einen Rotor 16 und eine Druckplatte 17 beinhaltet. Der Rotor 16 weist radiale Schlitze auf, in welchen Flügel geführt sind, die durch sichelförmige Arbeitsräume geführt werden, welche zwischen Rotor 16 und Nockenring 15 angeordnet sind. Im Innenraum 14 ist ein Stromregelventil 18 untergebracht, welches in seinem Inneren gegebenenfalls noch ein nicht dargestelltes Druckbegrenzungsventil beherbergt. Das Gehäuseteil 5 weist noch Kanäle zur Zu- und Abfuhr der Hydraulikflüssigkeit auf, von denen lediglich Teile der vertikalen Zufuhrkanäle 19 angedeutet sind, welche sich rechts und links vom Stromregelventil 18 erstrecken und in horizontale, knieförmige Kanäle 20 einmünden, die zu den Einlaßöffnungen der Arbeitsräume der Pumpe führen. (Die EP-A-0 068 035 zeigt die näheren Einzelheiten der Kanalführung.)

Das Gehäuseteil 7 weist eine Stufenbohrung 24 zur Aufnahme der Buchse 8 und der Gleitlager 9, 10 auf. Zwischen der Buchse 8 und dem Lager 9 einerseits und dem Lager 10 andererseits verbleibt ein Raum 25, in welchen die Köpfe von Kolben 26 hineinragen. Die Kolben 26 sind radial zur Welle 3 angeordnet und enthalten jeweils einen Innenraum 27, in welchem eine Feder 28 angeordnet ist. Die Feder 28 stützt sich jeweils an einem Deckel 29 ab und drängt den zugeordneten, hohlgebohrten Kolben 26 gegen einen Exzenter 30. Der Exzenter 30 stellt einen ringförmigen Körper dar, der eine zur Achse 4 konzentrische Rotationslauffläche 31 aufweist. Die Lauffläche 31 liegt an einer entsprechenden zylindrischen Lauffläche 32 der Welle 3 an. Eine Schereinrichtung in Form eines Scherstifts 33 überbrückt und verbindet beide Laufflächen 31, 32. Das vordere Ende des Scherstifts 33 ist dabei mit Preßsitz in eine Bohrung 34 der Welle 3 im Eingriff und mit dem rückwärtigen Ende in einer Bohrung 35 des Exzenters 30. Die Bohrung 34 mündet in einen Rückzugsraum 36 und die Bohrung 35 in einen Rückzugsraum 37, die zur Aufnahme des Fußes bzw. Kopfes des Scherstifts 33 nach dessen Bruch dienen.

In der Welle 3 ist ferner eine Längsbohrung 40 vorgesehen, die das innere Ende der Welle 3 mit einer radialen Bohrung 41 verbindet, um das Gleitlager 9 mit Öl zu versorgen. Eine weitere radiale Bohrung 42 in der Welle 3 führt in eine Ringnut 38 und dient zur Schmiermittelversorgung der inneren Lauffläche 31 des Exzenters. In den Kanälen 40 bis 42 sammelt sich vor allem Lecköl der Flügelzellenpumpe 1, welches somit nutzbringend zu Schmierzwecken ausgenutzt wird.

Der Zwischenraum 25 verfügt über eine Verbindung zu einem Öltank und stellt den Saugraum der Radialkolbenpumpe 2 dar. In der inneren, ausgezogenen Stellung der Kolben 26 sind die Innenräume 27 über Zuführungsbohrungen 23 mit dem Raum 25 verbunden, so daß das zu fördernde Hydrauliköl in den jeweiligen Innenraum 27 gelangen kann. Wenn der jeweilige Kolben 26 radial nach außen wandert, werden die betreffenden Zuführungsbohrungen 23 verschlossen. Bei weiterer Wanderung radial nach außen gelangt das komprimierte Öl über Rückschlagventile 22 in einen Druckauslaßkanal.

Wenn einer der Kolben 26 frißt, entsteht ein sehr hohes Reaktions-Drehmoment in der Welle 3. Wenn die Scherkraft des Scherbolzens 33 überschritten wird, geht dieser zu Bruch, und zwar in der Nähe der Flächen 31, 32. Es kann aber nicht erwartet werden, daß die Bruchfläche genau der Rotationslauffläche 31, 32 folgt. An der Bruchfläche werden immer gewisse Spitzen über die Rotationslauffläche 31 oder 32 hinausragen. Die hervorstehenden Spitzen am radial inneren Bruchstück des Scherbolzens 33 kommen mit der Lauffläche 31 des Exzenters 30 in Berührung und werden nach innen gepreßt, während das radial äußere Bruckstück von der Lauffläche 32 nach außen gepreßt wird. Diese Vorgänge erfolgen bei wenigen Umdrehungen der Welle 3, so daß die zu erwartende Wärmeentwicklung beim Eintreten des geschilderten Sicherungsfalls mäßig bleibt und nicht zur weiteren Zerstörung der Radialkolbenpumpe 2 führt. Bemerkenswert ist, daß der Betrieb der Flügelzellenpumpe 1 ungestört weiterlaufen kann.

Anstelle eines Scherstifts oder Scherbolzens 33 kann die Schereinrichtung auch eine andere Form annehmen. Wichtig ist, daß die Bruchstücke der Schereinrichtung im Sicherungsfall ein wenig von den Rotationslaufflächen 31, 32 zurückweichen können.

Der Ausfall der Radialkolbenpumpe 2 kann durch Aufleuchten eines Lämpchens beim Fahrer angezeigt werden. Durch Ersatz des Scherbolzens 33 kann der Schaden leicht behoben werden.

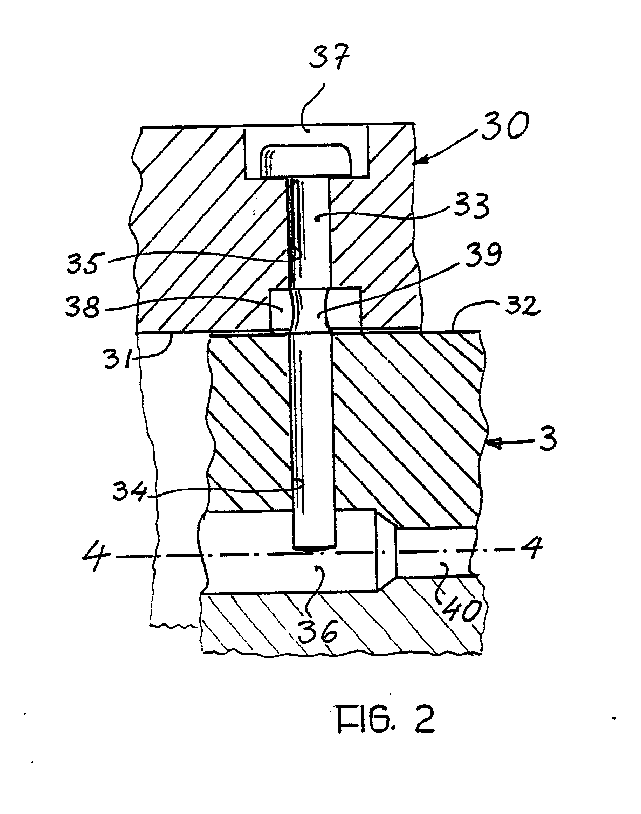

In Fig. 2 ist die Ringnut 38 in der radialen Ebene des Scherbolzens 33 gelegt und dieser weist eine Einschnürung oder Sollbruchstelle 39 auf, die innerhalb der Ringnut 38 liegt. Wenn demnach im Sicherungsfall der Scherbolzen 33 zu Bruch geht, treffen lediglich die beiden Bruchstücke des Scherbolzens 33 einige Mal aufeinander, bis sie in ihren Bohrungen 34, 35 soweit voneinander verschoben sind, daß ein gänzlich unbehinderter Umlauf der Welle eintritt. Die Ausführungsform nach Fig. 2 ist deshalb besonders günstig.

**Patentansprüche**

1. Doppelpumpe, enthaltend eine Hauptpumpe und eine Nebenpumpe, die über eine Welleneinrichtung angetrieben werden, welche eine Drehachse (4-4) bildet, wobei miteinander kooperierende, gleichachsig zur Drehachse (4-4) liegende Rotationslaufflächen (31, 32) durch eine Sicherheits-Schereinrichtung (33) überbrückt und miteinander verbunden sind, und Rückzugsräume (36, 37) für die Schereinrichtung vorgesehen sind, in die im Sicherungsfall, bei Bruch der Schereinrichtung, die Bruchstücke der Schereinrichtung zurückweichen können, dadurch gekennzeichnet, daß die Welleneinrichtung aus einer gemeinsamen Welle (3) für die Hauptpumpe, insbesondere eine Flügelzellenpumpe (1), und die Nebenpumpe, insbesondere eine Radialkolbenpumpe (2), besteht und zum Antrieb der Nebenpumpe ein Exzenter (30) oder Nocken an der Welle (3) vorgesehen ist,

daß die Rotationslaufflächen (31, 32) zylindrisch sind und einerseits der Welle (3) sowie andererseits dem Exzenter (30) angehören, und

daß die Schereinrichtung (33) sich zur Kraftübertragung in eine Bohrung (34) der Welle (3) und eine Bohrung (35) des Exzenters (30) radial erstreckt.

2. Doppelpumpe nach Anspruch 1, dadurch gekennzeichnet, daß die Schereinrichtung (33) eine Sollbruchstelle (39) aufweist, die innerhalb einer Ringnut (38) angeordnet ist, die, ausgehend von den miteinander kooperierenden Rotationslaufflächen (31, 32), im Exzenter (30) oder Nocken angeordnet ist.

3. Doppelpumpe nach Anspruch 1 oder 2, dadurch gekennzeichnet, daß die Schereinrichtung (33) aus einem Scherbolzen besteht, der innerhalb (34) der Welle (3) zylindrisch ausgebildet ist.

4. Doppelpumpe nach einem der Ansprüche 1 bis 3, dadurch gekennzeichnet,

daß die Welle (3) eine Längsbohrung (40) aufweist, die von der Hauptpumpe mit Öl gespeist wird und über wenigstens eine Radialbohrung (42) mit Laufflächen der Nebenpumpe verbunden ist,

daß die gleichachsig zur Drehachse (4-4) liegenden Rotations-Laufflächen (31, 32) unmittelbar mit der Radialbohrung (42) verbunden sind und

daß die Längsbohrung (40) eine weitere Radialbohrung (41) zur Ölversorgung eines Gleitlagers (9) der Welle (3) aufweist.

**Claims**

1. Double pump, comprising a main pump and a secondary pump which are driven via a shaft means forming a rotation axis (4-4), mutually co-operating rotational surfaces (31, 32), coaxial with the rotation axis (4-4), being bridged and interconnected by means of a shear device (33) which acts as a safety arrangement, and for which device retraction chambers (36, 37) are provided, the broken pieces of this device being able to yield by retracting into the chambers (36, 37), should the safety arrangement have been constrained to operate, in which event the said shear device will have broken, characterized in that

the shaft means consists of a common shaft (3) for the main pump and the secondary pump, the former being, in particular, a rotary vane pump (1), and the latter being, in particular, a radial piston pump (2), an eccentric (30) or cam being provided on the shaft (3) in order to drive the secondary pump, in that

the rotational surfaces (31, 32) are cylindrical, and belong, on the one hand, to the shaft (3) and, on the other hand, to the eccentric (30), and in that, in order to transmit forces,

the shear device (33) extends radially into a bore (34) in the shaft (3), and into a bore (35) in the eccentric (30).

2. Double pump according to Claim 1, characterized in that the shear device (33) exhibits a predetermined fracture point (39) which is located inside an annular groove (38), this groove (38) being located in the eccentric (30) or cam, starting from the mutually co-operating rotational surfaces (31, 32).

3. Double pump according to Claim 1 or 2, characterized in that the shear device (33) consists of a shear pin which is designed to be cylindrical over the portion contained within (34) the shaft (3).

4. Double pump according to one of Claims 1 to 3, characterized in that

the shaft (3) exhibits a longitudinal bore (40), into which the main pump delivers oil, and which is connected to surfaces of the secondary pump via at least one radial bore (42), in that

the rotational surfaces (31, 32), which are coaxial with the rotation axis (4-4), are connected directly to the radial bore (42), and in that

the longitudinal bore (40) exhibits an additional radial bore (41) which serves to supply oil to a plain bearing (9), belonging to the shaft (3).

**Revendications**

1. Pompe double, comportant une pompe principale et une pompe auxiliaire, qui sont entraînées par l'intermédiaire d'un dispositif à arbre qui constitue un axe de rotation (4-4), étant précisé que des portées de rotation (31, 32) coopérant l'une avec l'autre et coaxiales à l'axe de rotation (4-4) sont pontées et réunies l'une à l'autre par un dispositif de cisaillement de sécurité (33) et étant précisé que, pour le dispositif de cisaillement, sont prévues des chambres de retour (36, 37) dans lesquelles, en cas d'intervention de la sécurité, lors de la rupture du dispositif de cisaillement, les morceaux cassés du dispositif de cisaillement peuvent reculer, caractérisée

en ce que le dispositif à arbre est constitué d'un arbre commun (3) pour la pompe principale, en particulier une pompe à palettes (1), et pour la pompe auxiliaire, en particulier une pompe à pistons radiaux (2) ; et en ce que pour l'entraînement de la pompe auxiliaire, il est prévu un excentrique (30) ou une came sur l'arbre (3) ;

en ce que les portées de rotation (31, 32) sont cylindriques et appartiennent d'une part à l'arbre (3) et d'autre part à l'excentrique (30), et

en ce que le dispositif de cisaillement (33) s'étend radialement, pour la transmission de la force, dans un alésage (34) de l'arbre (3) et dans un alésage (35) de l'excentrique (30).

2. Pompe double selon la revendication 1, caractérisée en ce que le dispositif de cisaillement (33) présente une zone de rupture obligée (39) disposée à l'intérieur d'une rainure annulaire (38), elle-même disposée dans l'excentrique (30) ou dans la came en partant des portées de rotation (31, 32) coopérant l'une avec l'autre.

3. Pompe double selon la revendication 1 ou la revendication 2, caractérisée en ce que le dispositif de cisaillement (33) est constitué d'une broche de cisaillement de forme cylindrique à l'intérieur (34) de l'arbre (3).

4. Pompe double selon l'une des revendications 1 à 3, caractérisée

en ce que l'arbre (3) présente un alésage longitudinal (40) alimenté en huile par la pompe principale, et relié aux portées de la pompe auxiliaire par l'intermédiaire d'au moins un alésage radial (42),

en ce que les portées de rotation (31, 32), coaxiales à l'axe de rotation (4-4), sont directement reliées à l'alésage radial (42), et en ce que l'alésage longitudinal (40) présente un autre alésage radial (41) pour l'alimentation en huile d'un coussinet (9) de l'arbre (3).

FIG. 1

FIG. 2